# EUROPEAN PATENT SPECIFICATION

(11) **EP 2 596 955 B1**
(45) Date of publication and mention of the grant of the patent: **10.04.2019**
(21) Application number: 11809267.5
(22) Date of filing: 19.07.2011
(51) Int. Cl.: G11C 16/22, G06F 3/12, G06K 15/00

(54) **PRINTER AND CONTROL METHOD THEREOF**
DRUCKER UND STEUERVERFAHREN DAFÜR
IMPRIMANTE ET PROCÉDÉ DE COMMANDE ASSOCIÉ

(30) Priority: 19.07.2010 CN 201010229679
(43) Date of publication of application: 29.05.2013
(73) Proprietor: Shandong New Beiyang Information Technology Co., Ltd., Zhangcun Country, Huancui Zone Weihai Shandong 264203 (CN)
(72) Inventor: CONG, Qiangzi, Weihai, Shandong 264203 (CN); WANG, Chuntao, Weihai, Shandong 264203 (CN); JIANG, Tianxin, Weihai, Shandong 264203 (CN); XU, Jiabo, Weihai, Shandong 264203 (CN); YU, Zhuanlong, Weihai, Shandong 264203 (CN)
(74) Representative: Casalonga
(86) International application number: PCT/CN2011/077315
(87) International publication number: WO 2012/010079

(56) References cited:
- CN-A- 1 876 388
- CN-A- 101 052 973
- CN-A- 101 517 654
- CN-A- 101 905 578
- CN-U- 201 816 279
- JP-A- H0 927 049
- US-A1- 2006 279 757
- US-A1- 2007 014 614
- US-A1- 2009 109 462
- US-A1- 2010 054 762

## Description

### Technical Field of the Invention

The disclosure relates to a printer and a control method thereof.

In particular, the present invention relates to a control method of a printer according to the preamble of claim 1 and to a printer according to the preamble of claim 4, as they are both known from US 2006/279757 A1.

### Background of the Invention

Receipt printer is widely used in fields such as lottery, transportation, supermarket and shopping mall to print securities or transaction documents, for example, lottery, ticket, purchase invoice and the like. These receipts can be used normally only when the content of the receipt is printed completely.

In related art, during the printing process of receipts, due to printer errors such as uplift of top cover, cutter error, paper clogging and printer paper absence, the data of the current receipt is missing and the receipt content printed is incomplete. After these problems occur, two conditions generally appear according to different processes of receipt issuance and a dispute is caused between the seller and the buyer of the receipt. One condition is that: after transmitting the data of a to-be-printed receipt to a printer, the receipt is printed successfully will be concluded by the host control software of the printer, even though the receipt printed is invalid due to a printer error, the control software also considers that a valid receipt is printed out and registers the receipt number in the software system of the host and then deducts the money of the buyer. The other condition is that: if the printer reports an error during the printing process, the host control software of the printer does not register the receipt information, considers that the receipt is not printed out and does not deduct the money of the buyer. In the first condition, due to the printer error, the receipt that the buyer buys can not be used normally and thus strong dissatisfaction is caused. In the second condition, some buyers probably could use the unpaid invalid receipt to pretend a good one. Since there is no evidence to check, an unnecessary dispute is caused between the buyer and the seller.

The inventor discovers that it is difficult to provide a basis for judging whether the printing is normal when printing fails due to a printing error during the printing process in related art.

US 20091109462 A1 discloses an image forming apparatus and management system; US 2007/014614 A1 discloses printing and issuing device for ticket; US 2010/054762 A1 discloses a control method of host device." JP H09 27049 A discloses a printing device.

### Summary of the Invention

The disclosure is provided in view of the problem that it is difficult to provide a basis for judging whether the printing is normal when printing fails due to a printing error during the printing process. Therefore, the main purpose of the disclosure is to provide a printer and a control method thereof to solve the above problem.

In order to realize the purpose above, a control method of a printer is provided according to one aspect of the disclosure. The method comprises: detecting the state of the printer; and when the printer is in error state, saving printing data and error information of the printer.

In order to realize the purpose above, a printer is provided according to another aspect of the disclosure. The printer comprises a printing mechanism and a controller, and further comprises: a detection mechanism, configured to detect an state of the printer and to obtain error information when the printer is in error state; a first memory, configured to temporarily store the printing data of the printer; and a second memory, configured to store the error information and the printing data when the printer is in error state.

With the disclosure, the state of the printer is detected; the printing data and the error information of the printer are saved when the printer is in error state; and the printing data and the error information of the printer saved when the printer is in error state can be used as a basis for judging whether the printing is normal. Thus, the problem that it is difficult to provide a basis for judging whether the printing is normal when printing fails due to a printing error during the printing process is solved; therefore, the effect of providing a basis for judging whether the printing is normal when printing fails due to a printing error during the printing process is achieved.

### Brief Description of the Drawings

For a better understanding of the disclosure, accompanying drawings described hereinafter are provided to constitute one part of the application; the schematic examples of the disclosure and the description thereof are used to illustrate the disclosure but to limit the disclosure improperly. In the accompanying drawings:
Fig. 1 shows a structure diagram of a printer according to the first example of the disclosure;
Fig. 2 shows a flowchart of a control method of the printer according to the first example of the disclosure;
Fig. 3 shows a structure diagram of a printer according to the second example of the disclosure;
Fig. 4 shows a flowchart of a control method of the printer according to the second example of the disclosure;
Fig. 5 shows a flowchart of a control method of a printer according to the third example of the disclosure;
Fig. 6 shows a diagram of a storage format of the state information of the printing process according to the example of the disclosure;
Fig. 7 shows a flowchart of a control method of a printer according to the fourth example of the disclosure;
Fig. 8 shows a structure diagram of the printer according to the third example of the disclosure; and
Fig. 9 shows a flowchart of a method for controlling encryption of the receipt information of the printer shown in Fig. 8.

### Detailed Description of the Examples

It should be noted that the examples in the application and the characteristics of the embodiments can be combined if no conflict is caused. The disclosure is described below in detail by reference to the accompanying drawings in conjunction with examples.

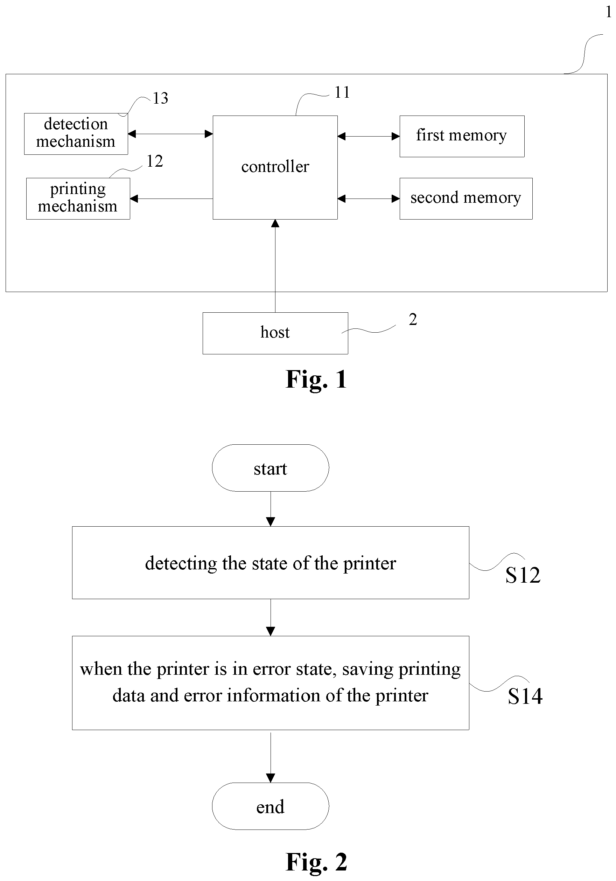

Fig. 1 shows a structure diagram of a printer according to the first example of the disclosure.

As shown in Fig. 1, the printer 1 comprises a printing mechanism 12 and a controller 11 and further comprises: a detection mechanism 13, which is configured to detect the state of the printer and to obtain error information when the printer is in error state; a first memory, which is configured to temporarily store the printing data of the printer; and a second memory, which is configured to store the error information and the printing data when the printer is in error state.

The first memory above can be a RAM memory 14; and the second memory above can be a FLASH memory 15.

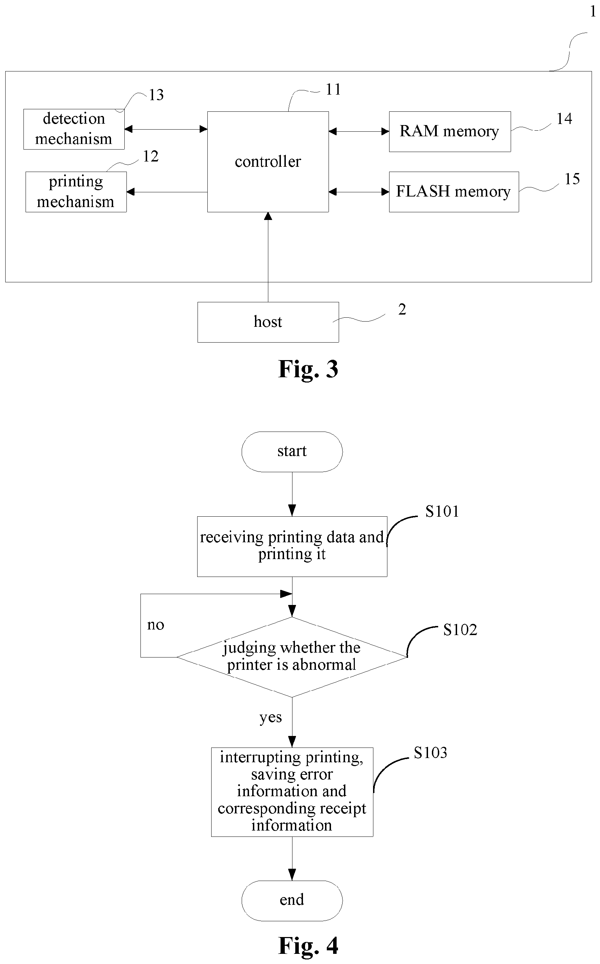

As shown in Fig. 3, a printer according to the second example of the disclosure comprise a controller 11, a printing mechanism 12, a detection mechanism 13, a RAM memory 14 and a FLASH memory 15 which are connected with the controller 11. The controller 11 is connected with a host 2 to receive an instruction issued by host control software and to control each mechanism of the printer to execute corresponding operations according to the instruction. The printing mechanism 12 comprises a medium conveying mechanism and a printing head which are not shown in the figure, wherein the medium conveying mechanism is configured to convey a printing medium, the printing head is configured to execute the printing operation and to print predetermined images and texts on the printing medium. The detection mechanism 13 can comprise one or more sensors which are arranged at different positions in the printer respectively and are electrically connected with the controller 11 to detect the state of the printer, for example, the amount of remained paper, the state of the medium inside the path, cutter state, opening and closing state of printer cover and so on. The detection mechanism 13 feeds back the detected printer state to the controller 11 in real time. The RAM memory 14 is configured to temporarily store the printing data transmitted by the host, wherein the printing data comprises receipt information and control instructions and so on. The FLASH memory 15 is configured to store the error information occurring to the printer during the printing process and the printing data in real time. In order to save the storage space, preferably, the FLASH memory 15 only stores the error information occurring to the printer during the printing process and the corresponding receipt information, wherein the error information includes error type, error occurrence time and the like. The receipt information includes receipt identification number, receipt content and the like.

It should be noted that the example of the disclosure is not limited to the receipt printer, but can be various different printers.

With the disclosure, during the printing process, if the printer experiences an error, the error information and the receipt information are recorded in the FLASH memory of the printer, as a basis for judging whether the receipt printing is normal.

Fig. 2 shows a flowchart of a control method of the printer according to the first example of the disclosure. As shown in Fig. 2, the method comprises the following steps: Step 12: detecting the state of the printer.

For example, the state of the printer can be detected by one or more sensors installed in the printer.

Step 14: when the printer is in error state, saving printing data and error information of the printer.

Preferably, when the printing data and the error information of the printer are saved, the printing data can be encrypted first, and then the encrypted printing data is saved.

Moreover, when the printing data and error information of the printer are saved, it can be judged whether the storage space of a memory is enough to save the printing data and the error information, wherein this memory is configured to store the printing data and error information of the printer; in a condition that the storage space of the memory is not enough, the earliest information stored in the memory is deleted.

Through the examples above, corresponding records of the error information in the printing process and the receipt information (that is, printing data) can be saved and can provide a basis for solving the dispute between the buyer and the seller of the receipt, thereby preventing the occurrence of the dispute. In addition, the validity of the receipt can be determined by querying the state information of the receipt in the printing process (including the stored error information and printing data), thus the conditions that the receipt issuer charges an invalid receipt and the receipt buyer uses an invalid receipt to pretend a good one can be avoided, and evidence is provided for solving the dispute.

Fig. 4 shows a flowchart of a control method of the printer according to the second example of the disclosure.

As shown in Fig. 4, the method comprises the following steps:
Step 101: receiving printing data and printing.

The printer receives the printing data transmitted by the host control software and temporarily stores the printing data into the RAM memory, and the controller controls the printing mechanism to execute the printing action.

Step 102: judging whether the printer is abnormal.

The detection mechanism detects the state of each part of the printer in real time according to the state of each sensor. For example, a paper amount detection sensor generally is provided in a paper house of the printer to detect the amount of remained paper, thereby judging whether the paper is sufficient. When the amount of remained paper is sufficient, it is judged that the printer is normal. When the amount of remained paper is insufficient, it is judged that the printer is abnormal. A paper presence sensor is provided in a medium conveying path to detect the state of the medium, thereby judging whether paper exists or paper is absent in the path. When paper exists during the printing process, it is judged that the printer is normal. Otherwise, it is judged that the printer is abnormal. A moving blade position sensor is provided in a cutter to detect the state of the moving blade of the cutter, thereby judging whether the cutter is reset or blocked. When the moving blade of the cutter is reset, it is judged that the printer is normal. Otherwise, it is judged that the printer is abnormal. A cover uplift sensor is provided between the printer cover and the printer main body to detect the state of the cover, thereby judging the opening or closing state of the cover. When the cover is closed, it is judged that the printer is normal. When the cover is open, it is judged that the printer is abnormal. A temperature detection sensor is provided in the printing head to detect the temperature of the printing head, thereby judging whether the temperature of the printing head is normal or overheated. When the temperature of the printing head is lower than a predetermined value, it is judged that the printer is normal. When the temperature is higher than the predetermined value, it is judged that the printer is abnormal.

It should be noted that the detection mechanism of the printer is not limited to the sensors mentioned above but can be set according to requirements. The sensor of the detection mechanism outputs normal or abnormal detection results according to respective judgment conditions.

Step 103: when the printer is abnormal, interrupting printing, and saving error information and corresponding receipt information into the FLASH memory.

During the printing process, when the controller receives the information fed back by the detection mechanism that the printer is abnormal, the controller would interrupt the printing operation immediately and sends alarm information. Meanwhile, the error information causing the abnormality of the printer and the current receipt information are saved into the FLASH memory, wherein the error information may include error type, error occurrence time and the like; the receipt information may include receipt identification which can identify the receipt content uniquely, for example, sequence number or detailed content of the receipt. By querying the information stored in the FLASH memory, it can be known which receipt is printed incompletely for what reason at what time and thus is invalidated
By recording (or saving) the error information in the printing process and the receipt information corresponding to the error, the control method of the printer provided by the disclosure can determine the validity of the receipt by querying the state of the receipt in the printing process, thereby avoiding the unreasonable charge of the receipt issuer on an invalid receipt and avoiding the pretending use of invalid receipts by the receipt buyer.

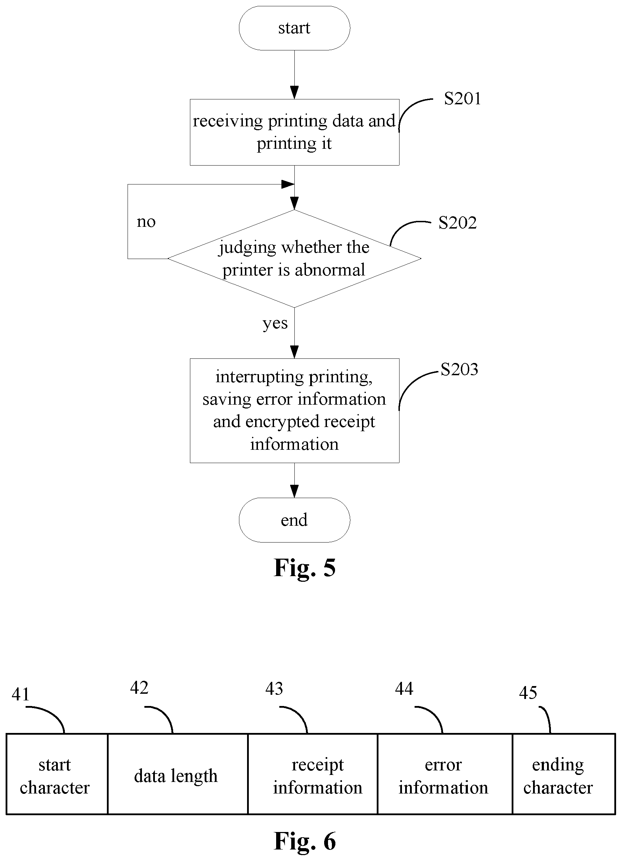

Fig. 5 shows a flowchart of a control method of the printer according to the third example of the disclosure; the method comprises the following steps:
Step 201 and Step 202 are the same as Step 101 and Step 102.
Step 203: when the printer is abnormal, interrupting printing, and saving error information and corresponding encrypted receipt information into the FLASH memory.

During the printing process, when the controller receives the information fed back by the detection mechanism that the printer is abnormal, the controller would interrupt the printing operation immediately and sends alarm information. Meanwhile, the error information causing the abnormality of the printer and the current receipt information are saved into the FLASH memory. Before the receipt information is saved, the receipt information is processed first according to a stored key to generate encrypted data, then the encrypted data is stored in the FLASH memory together with the error information in a corresponding way, wherein the key can be stored in the FLASH memory, or can be stored in a separate memory, so that the controller of the printer can encrypt the error information and the printing data using the key when the printer stores the error information and the printing data. Moreover, in a condition that the FLASH memory is a mobile memory, a separate controller can be set in the mobile memory to encrypt the error information and the printing data using the key. In order to keep the corresponding relationship between the error information and the receipt information, the information can be saved in a fixed format.

Fig. 6 shows a storage format of the state information of the receipt in the printing process. As shown in Fig. 6, the information includes a start character 41, data length 42, receipt information 43, error information 44 and an ending character 45, wherein the start character 41 is used to indicate the start of this information. The data length 42 is used to indicate the data amount of this information; the receipt information 43 may include receipt identification and/or encrypted receipt content. The error information 44 may include error type and error time. The ending character 45 is used to indicate the ending of this information. The error information 44 refers to the error information occurring when the current receipt information is printed. Through this method, the error information and the receipt information are stored in a corresponding way.

By encrypting the receipt information before the receipt information is stored, the control method of the printer provided by the disclosure can prevent the receipt information from being read by lawbreakers and thus can prevent the lawbreakers from forging receipts, thereby improving the security of information storage.

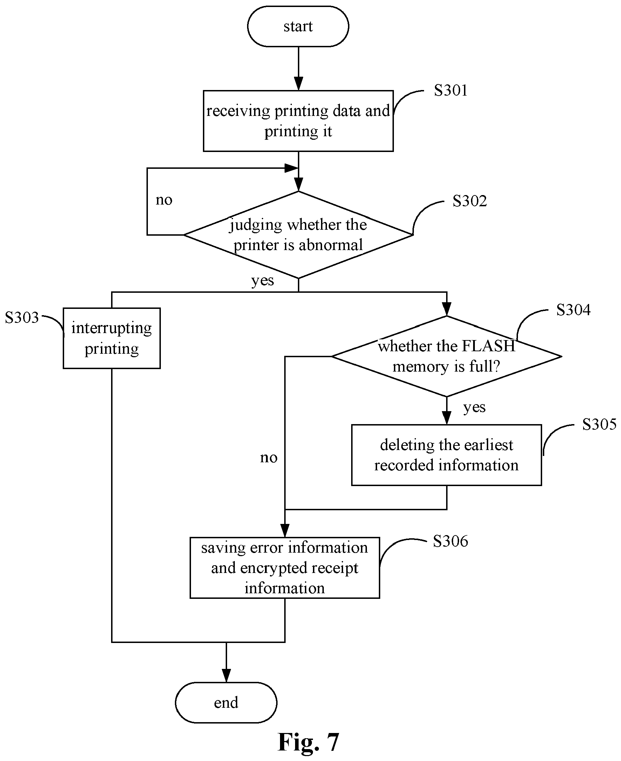

Fig. 7 shows a flowchart of a control method of the printer according to the fourth example of the disclosure; the method comprises the following steps:
Step 301 and Step 302 are the same as Step 101 and Step 102.
Step 303: interrupting printing.

During the printing process, when the controller receives the information fed back by the detection mechanism that the printer is abnormal, the controller would interrupt the printing operation immediately and sends alarm information.

Step 304: judging whether the FLASH memory is full. If yes, executing Step 305; otherwise, executing Step 306.

The amount of information the FLASH memory can store is relevant to the capacity of the FLASH memory. In order to guarantee that the latest information is normally saved in the FLASH memory, it is necessary to judge whether the FLASH memory is full before the information is stored in the FLASH memory. The specific method is to set a maximum record value according to the capacity of the FLASH memory and the maximum capacity of one piece of information and to set a counter, wherein the value of the counter increases by 1 each time a piece of information is stored in the memory. Before the information is stored, the counter value is compared with the maximum record value, when the counter value is greater than or equal to the maximum record value, it is considered that the FLASH memory is full. When the counter value is less than the maximum record value, it is considered that the FLASH memory is not full. When the FLASH memory is full, Step 305 is executed; otherwise, Step 306 is executed.

Step 305: deleting the earliest recorded information.

In order to save the latest error information and the receipt information, the storage space of the FLASH memory can be released by deleting the earliest recorded information.

Step 306: saving error information and corresponding encrypted receipt information in the FLASH memory.

The error information causing the abnormality of the printer and the current receipt information are saved in the FLASH memory. Before the receipt information is saved, the receipt information is processed first according to a predetermined key to generate encrypted data; then the encrypted data is stored in the FLASH memory together with the error information in a corresponding way.

Therefore, by circularly using the FLASH memory to record the error information in the printing process and the receipt information, the control method of the printer provided by the disclosure reduces the cost of equipment.

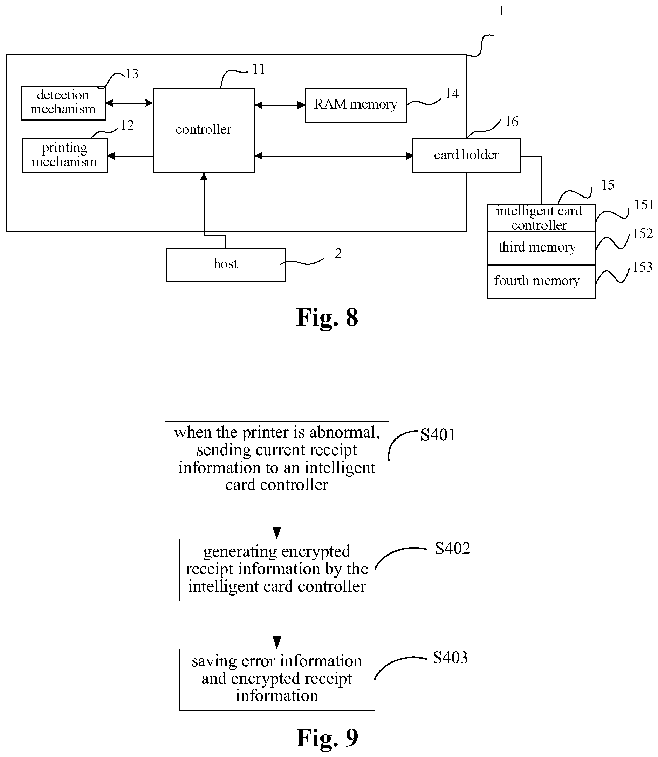

Fig. 8 shows a structure diagram of a printer according to the third example of the disclosure. The main difference between the printer in this example and the printer shown in Fig. 1 lies in that: a special card holder is provided for the printer, so that the FLASH memory used for storing the error information in the printing process and the receipt information can be a mobile memory card, wherein the mobile memory card is connected with the printer through the card holder, so that the receipt issuer can recycle the card holder regularly to query the receipt issuing condition of receipt sales outlets. Preferably, the mobile memory card is an intelligent card or other types of mobile memory card, wherein the intelligent card comprises an intelligent card controller 151 and a memory, in which the memory comprises a third memory 152 and a fourth memory 153; the third memory 152 is configured to store a key; the fourth memory 153 is configured to store error information and the receipt information. It should be noted that the third memory 152 and the fourth memory 153 mentioned above can be one memory, that is, the error information, the receipt information and the key are stored in one memory simultaneously.

Fig. 9 shows a flowchart of a method for controlling receipt information encryption of the printer shown in Fig. 8.

Step 401: when the printer is abnormal, sending current receipt information to an intelligent card controller.

When the printer is abnormal, the controller of the printer sends the current receipt information to the intelligent card controller.

Step 402: generating encrypted receipt information by the intelligent card controller.

The intelligent card controller encrypts the current receipt according to the key stored in the third memory of the intelligent card to generate encrypted data.

Step 403: saving error information and the encrypted receipt information.

The controller of the printer stores the encrypted receipt information and the error information into the fourth memory of the intelligent card in a predetermined format.

In the printer and the control method of the printer provided by the example, the controller of the printer does not participate in the generation of receipt encryption information, thus the intelligent card and the key are uniformly managed by the receipt issuing department only and the receipts retailer has no right to read the information; therefore, the security of receipt data is guaranteed.

From the description above, it can be seen that the disclosure provides a basis for judging whether the printing is normal when printing fails due to a printing error during the printing process, and hereby provides evidence for solving the dispute between the buyer and the seller of the receipt and thus prevents the occurrence of the dispute. Moreover, the disclosure can determine the validity of the receipt by querying the state of the receipt in the printing process, thereby avoiding the unreasonable charge of the receipt issuer on an invalid receipt and avoiding the pretending use of invalid receipts by the receipt buyer, and providing evidence for solving disputes.

The above are only the preferred examples of the disclosure and not intended to limit the disclosure. For those skilled in the art, various modifications and changes can be made to the disclosure, wherein the scope is defined by the appended claims.

## Claims

1. A control method of a printer, comprising:
detecting a state of the printer (1),
when the printer (1) is in error state, saving printing data and error information of the printer (1), wherein the printing data and the error information are recorded in a memory, the printing data comprises receipt information, wherein saving the printing data and the error information of the printer (1) comprises: saving the receipt information and the error information in a corresponding way, wherein the error information includes error type, the receipt information includes receipt identification number, receipt content,
**characterized in that**
the error information includes error occurrence time, the memory is located on a mobile FLASH memory card, and saving the printing data and the error information of the printer (1) comprises:
encrypting the printing data; and
saving the encrypted printing data.

2. The control method of the printer according to claim 1, wherein when the printer (1) is in error state, the method further comprises:
interrupting a printing operation of the printer (1).

3. The control method of the printer according to any one of claims 1 to 2, wherein saving the printing data and the error information of the printer (1) comprises:
judging whether storage space of a memory is enough to save the printing data and the error information, wherein the memory is configured to store the printing data and the error information of the printer (1); and
in a condition that the storage space of the memory is not enough, deleting the earliest information stored in the memory.

4. A printer, comprising a printing mechanism (12) and a controller (11), and comprising:
a detection mechanism (13), configured to detect an state of the printer (1) and to obtain error information when the printer (1) is in error state;
a first memory (14), configured to temporarily store printing data of the printer (1),
a second memory (15), configured to store the error information and the printing data when the printer (1) is in error state, the printing data and the error information are recorded in the second memory, the printing data is receipt information, wherein the receipt information and the error information are saved in the second memory (15) in a corresponding way,
wherein the error information includes error type, the receipt information includes receipt identification number, receipt content,
**characterized in that:**
the error information includes error occurrence time, the second memory (15) is located on a mobile FLASH memory card, and recording the printing data and the error information of the printer (1) comprises:
encrypting the printing data; and
saving the encrypted printing data.

5. The printer according to claim 4, wherein the printer (1) further comprises: a card holder, connected with the controller (11), configured to provide a connection interface for the mobile memory so that the mobile memory saves the error information and the printing data when the printer (1) is in error state.

6. The printer according to claim 5, wherein the mobile memory comprises:
a third memory (152), configured to store a key;
a fourth memory (153), configured to save the error information and the printing data when the printer (1) is in error state; and
a card controller (151), configured to encrypt the printing data using the key during the process of saving the error information and the printing data in the fourth memory.

7. The printer according to claim 4, wherein the printer (1) further comprises:
a fifth memory, configured to store a key,
wherein the controller (11) is further configured to encrypt the printing data using the key during the process of saving the error information and the printing data in the second memory.

8. The printer according to any one of claims 4 to 7, wherein the detection mechanism (13) comprises one or more sensors.

## Patentansprüche

1. Steuerverfahren für einen Drucker, umfassend:
Erfassen eines Zustands des Druckers (1),
wenn sich der Drucker (1) in einem Fehlerzustand befindet, Abspeichern von Druckdaten und Fehlerinformationen des Druckers (1), wobei die Druckdaten und die Fehlerinformationen in einem Speicher verzeichnet werden, wobei die Druckdaten Empfangsinformationen umfassen, wobei das Abspeichern der Druckdaten und der Fehlerinformationen des Druckers (1) Folgendes umfasst: Abspeichern der Empfangsinformationen und der Fehlerinformationen in einer entsprechenden Weise, wobei die Fehlerinformationen einen Fehlertyp beinhalten, wobei die Empfangsinformationen eine Empfangsidentifikationsnummer und einen Empfangsinhalt beinhalten,
**dadurch gekennzeichnet, dass**
die Fehlerinformationen einen Fehlereintrittszeitpunkt beinhalten, der Speicher sich auf einer mobilen FLASH-Speicherkarte befindet und das Abspeichern der Druckdaten und der Fehlerinformationen des Druckers (1) Folgendes umfasst:
Verschlüsseln der Druckdaten und
Abspeichern der verschlüsselten Druckdaten.

2. Steuerverfahren für den Drucker nach Anspruch 1, wobei, wenn sich der Drucker (1) in einem Fehlerzustand befindet, das Verfahren ferner Folgendes umfasst:
Unterbrechen eines Druckvorgangs des Druckers (1).

3. Steuerverfahren für den Drucker nach einem der Ansprüche 1 bis 2, wobei das Abspeichern der Druckdaten und der Fehlerinformationen des Druckers (1) Folgendes umfasst:
Beurteilen, ob ein Speicherplatz eines Speichers ausreicht, um die Druckdaten und die Fehlerinformationen abzuspeichern, wobei der Speicher dafür konfiguriert ist, die Druckdaten und die Fehlerinformationen des Druckers (1) zu speichern, und
falls der Speicherplatz des Speichers nicht ausreicht, Löschen der ältesten im Speicher gespeicherten Informationen.

4. Drucker, umfassend einen Druckmechanismus (12) und eine Steuereinrichtung (11), und umfassend:
einen Erfassungsmechanismus (13), der dafür konfiguriert ist, einen Zustand des Druckers (1) zu erfassen und Fehlerinformationen zu beziehen, wenn sich der Drucker (1) in einem Fehlerzustand befindet,
einen ersten Speicher (14), der dafür konfiguriert ist, Druckdaten des Druckers (1) vorübergehend zu speichern,
einen zweiten Speicher (15), der dafür konfiguriert ist, die Fehlerinformationen und die Druckdaten zu speichern, wenn sich der Drucker (1) in einem Fehlerzustand befindet, wobei die Druckdaten und die Fehlerdaten im zweiten Speicher verzeichnet werden, wobei es sich bei den Druckdaten um Empfangsinformationen handelt, wobei die Empfangsinformationen und die Fehlerinformationen im zweiten Speicher (15) in einer entsprechenden Weise abgespeichert werden,
wobei die Fehlerinformationen einen Fehlertyp beinhalten, wobei die Empfangsinformationen eine Empfangsidentifikationsnummer und einen Empfangsinhalt beinhalten,
**dadurch gekennzeichnet, dass**:
die Fehlerinformationen einen Fehlereintrittszeitpunkt beinhalten, der zweite Speicher (15) sich auf einer mobilen FLASH-Speicherkarte befindet und das Aufzeichnen der Druckdaten und der Fehlerinformationen des Druckers (1) Folgendes umfasst:
Verschlüsseln der Druckdaten und
Abspeichern der verschlüsselten Druckdaten.

5. Drucker nach Anspruch 4, wobei der Drucker (1) ferner Folgendes umfasst:
einen mit der Steuereinrichtung (11) verbundenen Kartenhalter, der dafür konfiguriert ist, eine Verbindungsschnittstelle für den mobilen Speicher bereitzustellen, damit der mobile Speicher die Fehlerinformationen und die Druckdaten abspeichert, wenn sich der Drucker (1) in einem Fehlerzustand befindet.

6. Drucker nach Anspruch 5, wobei der mobile Speicher Folgendes umfasst:
einen dritten Speicher (152), der dafür konfiguriert ist, einen Schlüssel zu speichern,
einen vierten Speicher (153), der dafür konfiguriert ist, die Fehlerinformationen und die Druckdaten abzuspeichern, wenn sich der Drucker (1) in einem Fehlerzustand befindet, und
eine Kartensteuereinrichtung (151), die dafür konfiguriert ist, während des Prozesses des Abspeicherns der Fehlerinformationen und der Druckdaten im vierten Speicher die Druckdaten mittels des Schlüssels zu verschlüsseln.

7. Drucker nach Anspruch 4, wobei der Drucker (1) ferner Folgendes umfasst:
einen fünften Speicher, der dafür konfiguriert ist, einen Schlüssel zu speichern,
wobei die Steuereinrichtung (11) ferner dafür konfiguriert ist, während des Prozesses des Abspeicherns der Fehlerinformationen und der Druckdaten im zweiten Speicher die Druckdaten mittels des Schlüssels zu verschlüsseln.

8. Drucker nach einem der Ansprüche 4 bis 7, wobei der Erfassungsmechanismus (13) einen oder mehrere Sensoren umfasst.

## Revendications

1. Procédé de commande d'une imprimante, comprenant :
de détecter un état de l'imprimante (1),
quand l'imprimante (1) est dans un état d'erreur, sauvegarder les données d'impression et les informations d'erreur de l'imprimante (1), dans lequel les données d'impression et les informations d'erreur sont enregistrées dans une mémoire, les données d'impression comprennent des informations de réception dans lequel sauvegarder les données d'impression et les informations d'erreur de l'imprimante (1) comprend : de sauvegarder les informations de réception et les informations d'erreur d'une manière correspondante, dans lequel l'information d'erreur inclut un type d'erreur, l'information de réception inclut un numéro d'identification de réception, un contenu de réception,
**caractérisé en ce que**
les informations d'erreur incluent un temps d'occurrence d'erreur, la mémoire est située sur une carte mémoire FLASH mobile, et sauvegarder les données d'impression et les informations d'erreur de l'imprimante (1) comprend :
d'encrypter les données d'impression ; et
de sauvegarder les données d'impression cryptées.

2. Procédé de commande de l'imprimante selon la revendication 1, dans lequel quand l'imprimante (1) est dans un état d'erreur, le procédé comprend en outre :
d'interrompre une opération d'impression de l'imprimante (1).

3. Procédé de commande de l'imprimante selon l'une quelconque des revendications 1 à 2, dans lequel sauvegarder les données d'impression et les informations d'erreur de l'imprimante (1) comprend :
de juger si l'espace de stockage d'une mémoire est suffisant pour sauvegarder les données d'impression et les informations d'erreur, dans lequel la mémoire est configurée pour stocker les données d'impression et les informations d'erreur de l'imprimante (1) ; et
dans un état où l'espace de stockage de la mémoire n'est pas suffisant, effacer les informations les plus vieilles stockées dans la mémoire.

4. Imprimante, comprenant un mécanisme d'impression (12) et une commande (11), et comprenant :
un mécanisme de détection (13), configuré pour détecter un état de l'imprimante (1) et pour obtenir des informations d'erreur quand l'imprimante (1) est dans un état d'erreur ;
une première mémoire (14), configurée pour stocker temporairement des données d'impression de l'imprimante (1),
une seconde mémoire (15), configurée pour stocker les informations d'erreur et les données d'impression quand l'imprimante (1) est dans un état d'erreur, les données d'impression et les informations d'erreur sont enregistrées dans la seconde mémoire, les données d'impression sont des informations de réception, dans lequel les informations de réception et les informations d'erreur sont sauvegardées dans la seconde mémoire (15) d'une manière correspondante,
dans lequel les informations d'erreur incluent un type d'erreur, les informations de réception incluent un numéro d'identification de réception, un contenu de réception,
**caractérisé en ce que**
les informations d'erreur incluent un temps d'occurrence d'erreur, la seconde mémoire (15) est située sur une carte mémoire FLASH mobile, et enregistrer les données d'impression et les informations d'erreur de l'imprimante (1) comprend :
d'encrypter les données d'impression ; et
de sauvegarder les données d'impression cryptées.

5. Imprimante selon la revendication 4, dans laquelle l'imprimante (1) comprend en outre :
un support de carte, connecté avec la commande (11), configuré pour fournir un interface de connexion pour la mémoire mobile de telle manière que la mémoire mobile sauvegarde les informations d'erreur et les données d'impression quand l'imprimante (1) est dans un état d'erreur.

6. Imprimante selon la revendication 5, dans laquelle la mémoire mobile comprend :
une troisième mémoire (152), configuré pour stocker une clé ;
une quatrième mémoire (153), configurée pour sauvegarder les informations d'erreur et les données d'impression quand l'imprimante (1) est dans un état d'erreur ; et
un commande de carte (151), configurée pour encrypter les données d'impression en utilisant la clé pendant le processus de sauvegarde des informations d'erreur et des données d'impression dans la quatrième mémoire.

7. Imprimante selon la revendication 4, dans laquelle l'imprimante (1) comprend en outre ;
une cinquième mémoire, configurée pour stocker une clé,
dans laquelle la commande (11) est en outre configurée pour encrypter les données d'impression en utilisant la clé pendant le processus de sauvegarde des informations d'erreur et des données d'impression dans la seconde mémoire.

8. Imprimante selon l'une quelconque des revendications 4 à 7, dans laquelle le mécanisme de détection (13) comprend un ou plusieurs capteurs.
